# EUROPEAN PATENT APPLICATION

(11) **EP 3 113 547 A1**
(43) Date of publication of application: **04.01.2017**
(21) Application number: 16177715.6
(22) Date of filing: 04.07.2016
(51) Int. Cl.: H04W 48/18, H04W 60/00, H04W 12/06, H04W 8/18

(54) **METHOD OF AND APPARATUS FOR NETWORK ACCESS IN WIRELESS COMMUNICATION SYSTEM SUPPORTING ISOLATED E-UTRAN OPERATION FOR PUBLIC SAFETY**

(30) Priority: 03.07.2015 KR 20150095548
(71) Applicant: Samsung Electronics Co., Ltd., Suwon-si, Gyeonggi-do (KR)
(72) Inventor: Baek, Youngkyo, 16677 Suwon-si, Gyeonggi-do (KR); Cho, Songyean, 16677 Suwon-si, Gyeonggi-do (KR); Guttman, Erik, 16677 Gyeonggi-do (KR)
(74) Representative: Gulde & Partner

(57) **Abstract**

A terminal and a method for the terminal to attach to a network in a wireless communication system are provided. The method includes selecting a service provider based on service provider information received from a base station; identifying if the selected service provider operates an isolated evolved universal mobile telecommunications system (UMTS) terrestrial radio access network (E-UTRAN) operation for public safety (IOPS) network; if the selected service provider operates the IOPS network, selecting authentication information to attach to the IOPS network from a subscriber identification storage unit; and accessing the IOPS network using the selected authentication information.

## Description

### BACKGROUND

### 1. Field of the Disclosure

The present disclosure relates generally to a method and system for moving a terminal to an Isolated evolved universal mobile telecommunications system (UMTS) terrestrial radio access network (E-UTRAN) operation for public safety (IOPS) network.

### 2. Description of Related Art

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the loT technology and the Big Data processing technology through connection with a cloud server, has emerged. As technology elements, such as "sensing technology", "wired/wireless communication and network infrastructure", "service interface technology", and "Security technology" have been demanded for loT implementation, a sensor network, a Machine-to-Machine (M2M) communication, Machine Type Communication (MTC), and so forth have been recently researched. Such an loT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to loT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the loT technology.

To ensure the continued ability of public safety users to communicate within mission critical situations, an Isolated E-UTRAN mode of operation is intended to provide the ability to maintain a level of communications for the public safety users, via an evolved Node B (eNB) (or base station) or set of connected eNBs, following the loss of backhaul communications.

When the backhaul is lost for a base station, on which a terminal (or user equipment (UE)) using a public safety service is camping, the base station may to an IOPS mode, in order to provide at least some of the public safety services that have been provided over a macro network. For example, the base station operating in the IOPS mode may run a local evolved packet core (EPC) system and may continue to locally provide a public safety service. However, in order for a base station to operate in the IOPS mode, various systems must still be developed to allow terminals to recognize the condition and access the IOPS network.

### SUMMARY

Accordingly, an aspect of present disclosure is to provide a system in which a terminal receives, from a base station, a notification that the base station is operating in an IOPS mode because backhaul of the base station is lost or recognizes that the base station has transitioned to an IOPS mode, and accesses an IOPS network of the base station.

Another aspect of the present disclosure is to provide a system for allowing a terminal to transition access to from an IOPS network to a macro network, when backhaul of a base station is recovered.

In accordance with an aspect of the present disclosure, a method is provided for a terminal to attach to a network in a wireless communication system. The method includes selecting a service provider based on service provider information received from a base station; identifying if the selected service provider operates an Isolated Evolved Universal Mobile Telecommunications System (UMTS) Terrestrial Radio Access Network (E-UTRAN) operation for public safety (IOPS) network; if the selected service provider operates the IOPS network, selecting authentication information to attach to the IOPS network from a subscriber identification storage unit; and accessing the IOPS network using the selected authentication information.

In accordance with another aspect of the present disclosure, a terminal is provided, which includes a transceiver; a subscriber identification storage unit configured to store authentication information corresponding to service provider information; and a controller configured to: select a service provider, based on service provider information received from a base station; identify if the selected service provider operates an Isolated Evolved Universal Mobile Telecommunications System (UMTS) Terrestrial Radio Access Network (E-UTRAN) operation for public safety (IOPS) network; if the selected service provider operates the IOPS network, select, from the subscriber identification storage unit, authentication information to attach to the IOPS network; and access the IOPS network using the selected authentication information.

### BRIEF DESCRIPTION OF THE DRAWINGS

The above and other aspects, features and advantages of certain embodiments of the present disclosure will be more apparent from the following detailed description, taken in conjunction with the accompanying drawings, in which:
FIG. 1 illustrates an emergency communication network according to an embodiment of the present disclosure;
FIG. 2 is a flowchart illustrating a method of recovering a public safety service through IOPS according to an embodiment of the present disclosure;
FIG. 3 is a flowchart illustrating a method for a UE to select a public land mobile network (PLMN) for IOPS via PLMN selection and to attach to a network, according to an embodiment of the present disclosure;
FIGs. 4A and 4B illustrate UEs according to embodiments of the present disclosure;
FIG. 5A is a flowchart illustrating a method for a UE to select and access an IOPS network according to an embodiment of the present disclosure;
FIG. 5B is a flowchart illustrating a method for a UE to transition access to from an IOPS network to a macro network and to attach to the macro network according to an embodiment of the present disclosure;
FIG. 6A is a flowchart illustrating a method for a UE to select and access an IOPS network according to an embodiment of the present disclosure;
FIG. 6B is a flowchart illustrating a method for a UE to transition access to from an IOPS network to a macro network and to attach to the macro network according to an embodiment of the present disclosure;
FIG. 7 illustrates a structure of Management Object (MO) for provisioning via Open Mobile Alliance-Device Management (OMA-DA), which allows a UE to receive settings used by an Isolated E-UTRAN from a network, according to an embodiment of the present disclosure;
FIG. 8A is a flowchart illustrating a method for a UE to select and access an IOPS network according to an embodiment of the present disclosure;
FIG. 8B is a flowchart illustrating a method for a UE to transition access to from an IOPS network to a macro network and to attach to the macro network according to an embodiment of the present disclosure; and
FIG. 9 illustrates an eNB according to an embodiment of the present disclosure.

### DETAILED DESCRIPTION OF EMBODIMENTS OF THE DISCLOSURE

Various embodiments of the present disclosure are described in detail below with reference to the accompanying drawings. Those skilled in the art will appreciate that various modifications, additions, and substitutions are possible from the embodiments of the present disclosure that are illustrated and described in detail in the following description, and the scope of the present disclosure should not be limited to the following embodiments. The embodiments of the present disclosure are provided such that those skilled in the art completely understand the present disclosure. It should be understood that the present disclosure may include all modifications and/or equivalents and/or substations included in the idea and technical scope of the present description.

In the drawings, the same or similar elements may be denoted by the same reference numbers even though they are depicted in different drawings.

The terms and expressions used in the present disclosure are only used to describe specific various embodiments, and are not intended to limit the present disclosure. Singular forms are intended to include plural forms unless the context clearly indicates otherwise.

Unless otherwise defined, all terms, including technical and scientific terms, have the same meanings as commonly understood by one of ordinary skill in the art to which this disclosure belongs. Further, terms, such as those defined in commonly used dictionaries, should be interpreted as having meanings that are consistent with their meanings in the context of the relevant art and not be interpreted in idealized or overly formal senses, unless expressly so defined as such herein.

Herein, expressions such as "include," "may include," "with," "have," and "capable of including" denote the presence of the listed functions, characteristics, numbers, steps, operations, constituent elements, components or a combination thereof, but may not be construed to exclude the existence of or a possibility of the addition of one or more other functions, characteristics, numbers, steps, operations, processes, constituent elements, components, or combinations thereof.

The expression "and" or "or" includes any and all combinations of one or more of the associated listed items. For example, the expression "A and/or B" may include A, may include B, or may include both A and B.

The expressions including ordinal numbers, such as "first" and "second," etc., may modify various elements. However, such elements are not limited by the above expressions. For example, the expressions do not limit the sequence and/or importance of the elements. Instead, the expressions are used for the purpose of distinguishing an element from another element. For example, a first user device and a second user device indicate different user devices, although both of the first user device and the second user device may be the same type of user devices. For example, a first element could be referred to as a second element, and similarly, a second element could also be referred to as a first element without departing from the scope of the present disclosure.

When a component is referred to as being "connected" or "accessed" to another component, not only may the component be directly connected or accessed to the other component, but an additional component may exist between therebetween. However, when a component is referred to as being "directly connected" or "directly accessed" to another component, there is no additional component therebetween.

In addition, the term "E-UTRAN" may be interchangeable with or used in the sense including at least one of: an eNBs, a Node B, a base station (BS), a radio access unit, a BS controller, a node on a network, etc.

The term "terminal" may include a UE, a mobile station (MS), a cellular phone, a smartphone, a computer, a multimedia system capable of performing communication functions, etc.,

Although embodiments of the present disclosure are described in relation to Long Term Evolution (LTE) systems, the subject matter of the present disclosure may also be applied to other types of communication systems which have similar technical backgrounds and channel forms.

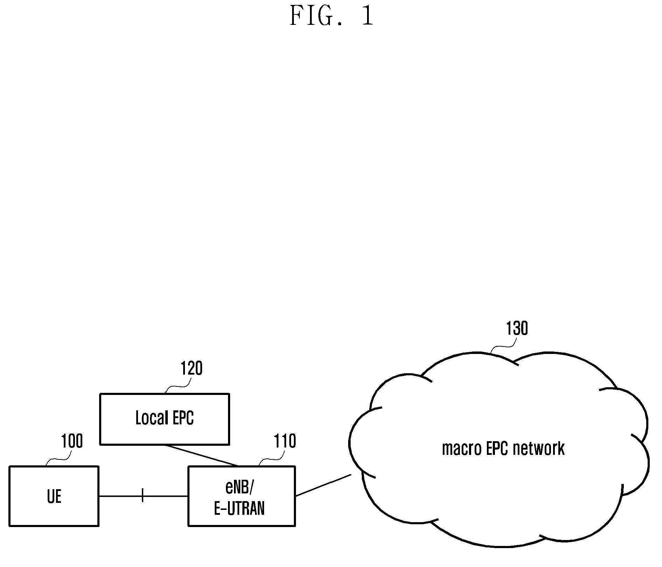

FIG. 1 illustrates an emergency communication network according to an embodiment of the present disclosure.

Referring to FIG. 1, when backhaul between an eNB 110 and a macro EPC network 130 is lost, the eNB 110 starts to run a Local EPC 120, in order to operate in an IOPS mode. The eNB 110 and local EPC 120 may be physically located in the same area. For example, the Local EPC 120 and the eNB 110 are always connected to each other. The Local EPC 120 provides EPC functions at local level, i.e., Mobility Management Entity (MME), serving gateway (S-GW), packet date network (PDN) gateway (P-GW), and home subscriber station/authentication center (HSS/AuC), and also corresponding services.

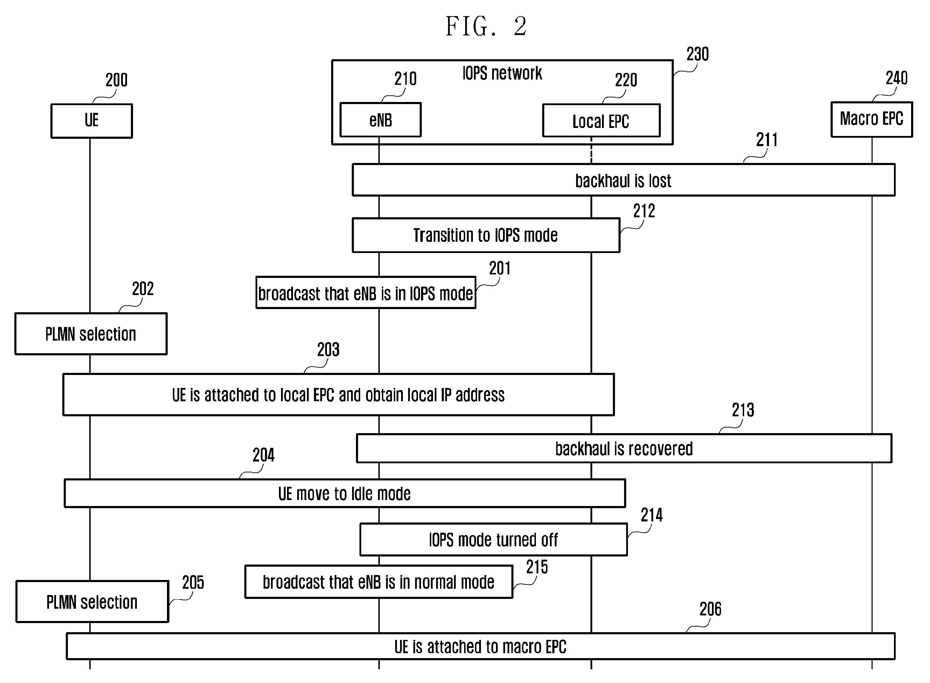

When a public safety service, e.g., a mission critical push-to-talk (MCPTT) service, is used in an emergency communication network and a backhaul network has collapsed, the individual entities, i.e., a UE 100, the Local EPC 120, the eNB 110, and the macro EPC network 130, are operated as illustrated in FIG. 2.

Referring to FIG. 2, when a UE 200 receives a public safety service, e.g., an MCPTT service, via a macro network, a local EPC 220 does not operate. When an eNB 210 recognizes that backhaul is lost in step 211, it transitions to an IOPS mode in step 212. Specifically, the eNB 210 runs the local EPC 220, opens a connection to the local EPC 220, and prepares for transitioning the access to from the current network to an IOPS network. After the preparation has been completed, the eNB 210 establishes connection with the IOPS network 230 and operates in the IOPS mode.

In step 201, the eNB 210 broadcasts a preset PLMN identifier (ID) for IOPS to UE devices camping thereon, via a message system information bit (SIB)#1, informing the UE devices that it is operating in the IOPS mode because it lost a backhaul with the macro EPC 240.

In step 202, the UE 200 recognizes that the PLMN of a macro network no longer provides services, searches for a PLMN that can provide services, via PLMN selection, and selects an identified PLMN. The UE 200 performs an attaching process to the Local EPC 220 corresponding to an IOPS PLMN and is assigned a Local Internet protocol (IP) address in step 203.

In step 213, the eNB 210 recognizes that a backhaul with the macro network, i.e., the macro EPC 240, is recovered, and in step 204, the IOPS network 230 moves the connected UE to an idle mode. In step 214, the IOPS network 230 turns off the IOPS mode and starts to provide services via the macro network. In step 215, the eNB 210 normally broadcasts the PLMN ID of the macro network via a message SIB#1.

In step 205, the UE 200 recognizes that the PLMN of the IOPS network no longer provides services, and searches for a PLMN of a macro network that can provide services, via PLMN selection. In step 206, the UE 200 accesses the macro network, i.e., the macro EPC 240.

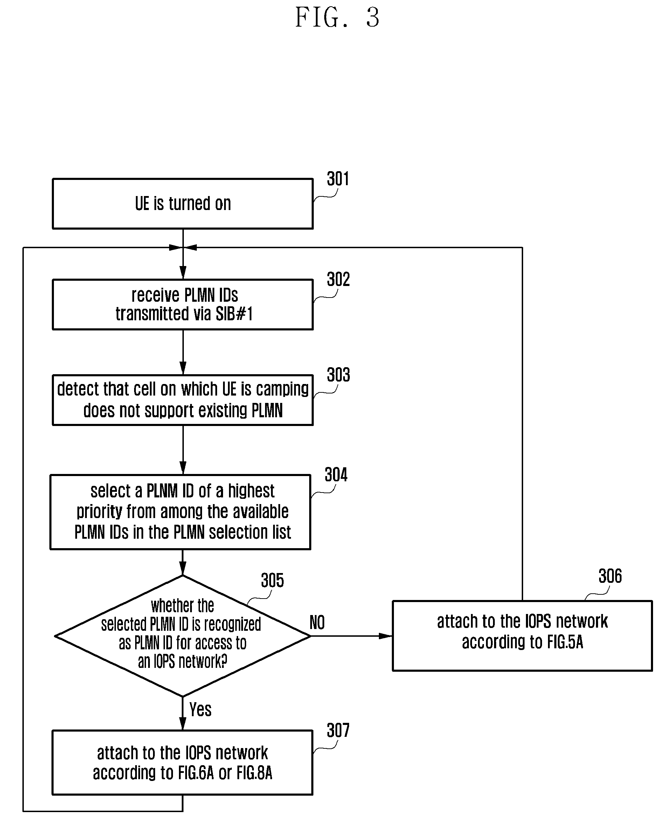

FIG. 3 is a flowchart illustrating a method for a UE to select a PLMN for IOPS via PLMN selection and to attach to a network, according to an embodiment of the present disclosure.

Referring to FIG. 3, in step 301, the UE is turned on.

In step 302, the UE receives, from an eNB, information regarding a PLMN providing services, via a PLMN ID contained in SIB#1.

In step 303, the UE detects, via the PLMN information, that the cell on which the UE is camping no longer supports a PLMN of an existing macro network, and starts a procedure to select a new PLMN.

For example, in order to detect that a PLMN of an existing macro network does not provide services, when UE is in idle mode, it recognizes that a PLMN ID contained in the SIB#1 does not include a PLMN ID of an existing macro network. When UE is in connected mode, because it does not communicate with an eNB for a certain period of time, the UE may transition to an idle mode and then perform the same operation as the UE in idle mode described above.

In step 304, the UE selects, as a new PLMN, a PLMN ID with a highest priority from among the available PLMN IDs of a PLMN selection list stored in Universal Subscriber Identification Module (USIM).

In step 305, the UE determines (recognizes) if the selected PLMN ID is a PLMN ID for IOPS.

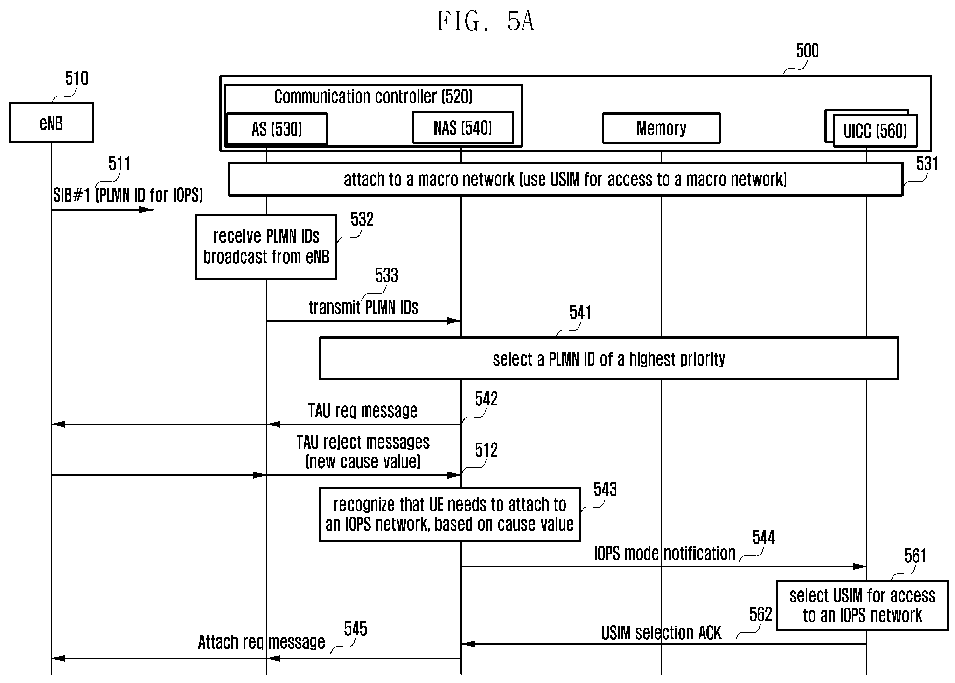

If the UE does not recognize the selected PLMN ID as a PLMN ID for IOPS, even though the selected PLMN ID is actually a PLMN for IOPS, the UE accesses an IOPS network using a method as illustrated in FIG. 5A, in step 306. When a PLMN ID is not a PLMN for IOPS, the UE performs a location registration process in a macro network, such as a Tracking Area Update (TAU) procedure, etc.

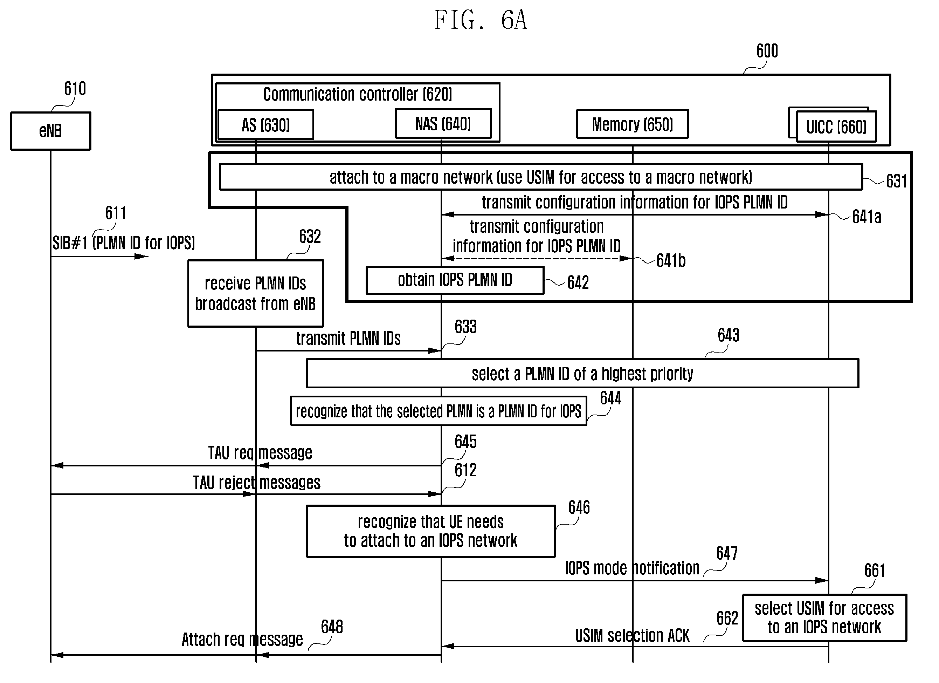

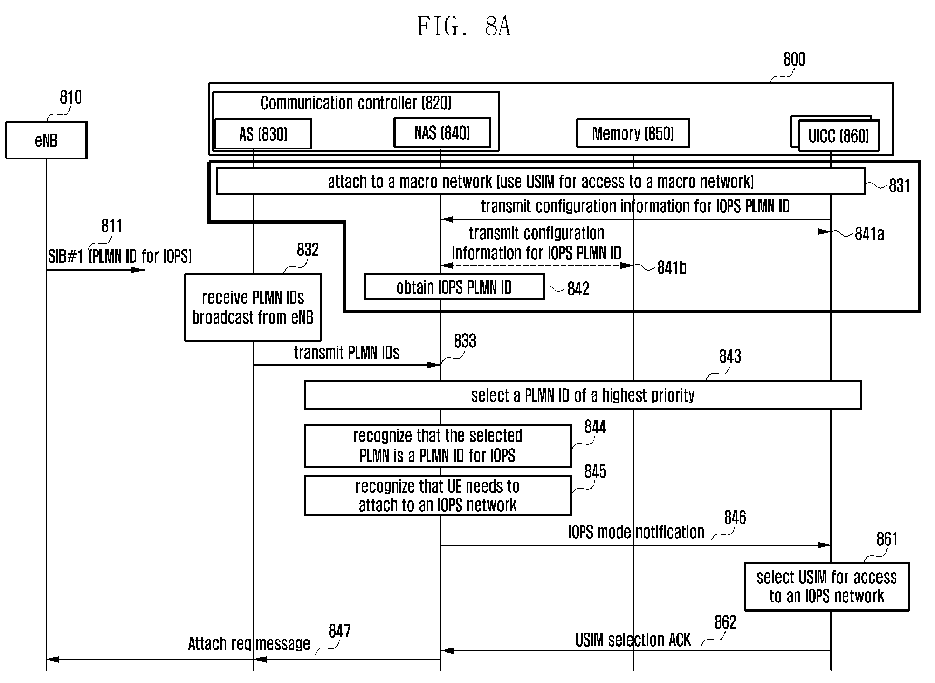

However, if the selected PLMN ID is a PLMN ID for IOPS in step 305, the UE accesses an IOPS network using a method as illustrated in FIGs. 6A or 8A, in step 307.

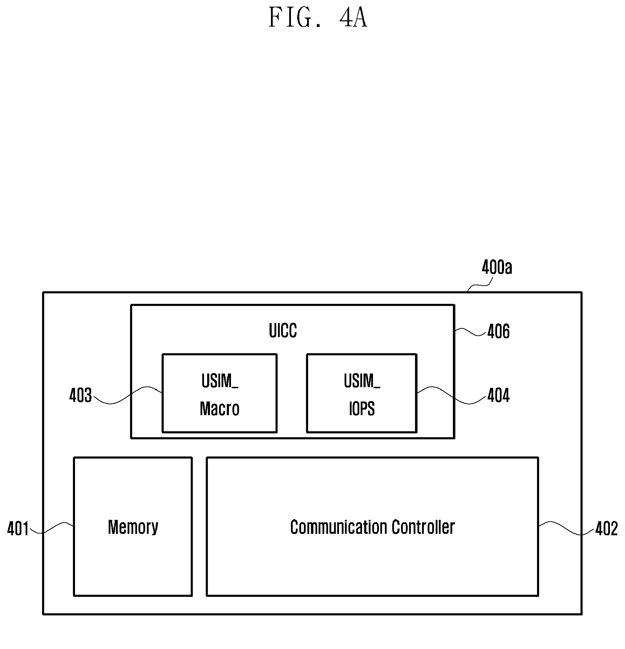

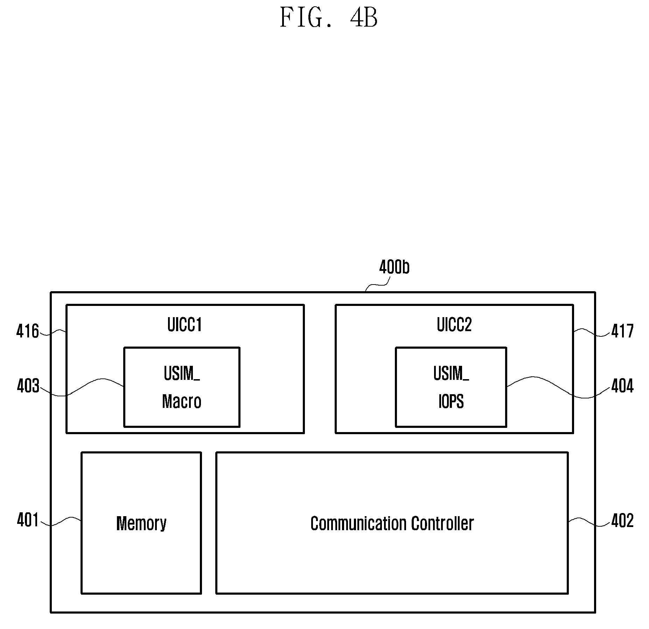

FIGs. 4A and 4B illustrate UEs according to embodiments of the present disclosure. Specifically, FIG. 4A illustrates UE in which a universal subscriber identity module (USIM) for access to a macro network and a USIM for access to an IOPS network are included in the same universal integrated circuit card (UICC), and FIG. 4B illustrates a UE in which a USIM for access to a macro network and a USIM for access to an IOPS network are included in separate UICCs, respectively.

Referring to FIG. 4A, UE 400a includes a UICC 406, a communication controller 402 for controlling communication, and a memory 401 for storing information related to network access. The UICC 406 includes a USIM 403 for access to a macro network and a USIM 404 for access to an IOPS network.

The communication controller 402 may be divided into a part for managing an access stratum (AS) and a part for managing a non-access stratum (NAS). For the sake of convenience, these elements may also be expressed as separate built-in entities of the UE.

The memory 401 stores information, e.g., PLMN IDs for IOPS, that the UE 400a uses to attach to a network via OMA DM, etc.

Referring to FIG. 4B, a UE 400b includes a first UICC 416, a second UICC 417, the communication controller 402 for controlling communication, and the memory 401 for storing information related to network access. The first UICC 416 includes the USIM 403 for access to a macro network and the second UICC 417 includes the USIM 404 for access to an IOPS network.

The UEs 400a and 400b may also include other components, e.g., a transceiver for performing transmission/reception of signals under the control of the communication controller 402.

Alternatively, the UEs 400a and 400b may be implemented in such a way that the USIM 404 for IOPS is stored in the memory 401, instead of the UICC 406 or the second UICC 417.

FIG. 5A is a flowchart illustrating a method for a UE to select an IOPS mode and to attach to an IOPS network according to an embodiment of the present disclosure. More specifically, FIG. 5A illustrates a method for a UE to attach to an IOPS network without ascertaining the configuration information regarding a PLMN ID managing an IOPS network (an IOPS PLMN ID).

Referring to FIG. 5A, a UE 500 is attached to a macro network in step 531. In this case, the UE is attached to a macro network using USIM 403 for access to a macro network. In FIG. 5A, the UE 500 may have the same configuration as the UE 400a in FIG. 4A or the UE 400b in FIG. 4B. That is, the UE 500 the UICC 560 may be configured the same as UICC 406 including a USIM 403 for access to a macro network and a USIM 404 for access to an IOPS network, or may have multiple UICCs that are configured the same as UICCs 416 and 417, which include a USIM 403 for access to a macro network and a USIM 404 for access to an IOPS network, respectively.

In step 511, the eNB 510 starts to operate in an IOPS mode, and includes an IOPS PLMN ID in SIB#1, which is broadcast to indicate that the UE is operating in an IOPS mode.

The AS 530 of the communication controller 520 receives PLMN IDs via the SIB#1 from the eNB 510 in step 532 and transfers the PLMN IDs to the NAS 540 in step 533.

In step 541, the UE 500 selects a PLMN ID of a highest priority from among the received PLMN IDs in the PLMN selection list stored in the USIM.

If the NAS 540 of the UE 500 ascertains that the selected PLMN ID is not a PLMN for access to an IOPS network or does not recognize the selected PLMN ID as a PLMN ID for access to an IOPS network, the NAS 540 performs a location registration process in a macro network, such as a TAU procedure, etc, when the NAS 540 of the UE ascertains that its TAI list does not contain a TAI of a corresponding cell, in step 542.

In step 512, the local EPC 510 receives the TAU request, fails in authenticating the TAU request of the UE, and transmits a TAU reject message to the UE 500. In this case, the local EPC 510 defines information contained in the TAU reject message, e.g., a cause value and a sub cause value, along with an existing value "Identity of UE cannot be recognized," and informs the UE 500 of "transmitted from local EPC." Alternatively, the local EPC 510 defines a separate cause value to be set to a value "Access to local EPC does not recognize identity of UE" and then transmits it to the UE 500.

In step 543, the UE 500 recognizes that it should attach to an IOPS network, based on the cause values.

In step 544, in order to obtain authentication information to attach to an IOPS network, the NAS 540 of the UE 500 transmits an IOPS mode notification to the UICC 560.

For example, when the UE 500 has a UICC 560 configured to be the same as UICC 406, which including the USIM 403 for access to a macro network and the USIM 404 for access to an IOPS network, as illustrated in FIG. 4A, the NAS 540 notifies the UICC 560 that it is attached in the IOPS mode.

In step 561, the UICC 560 selects and activates the USIM 404 for access to an IOPS network from among the USIM information stored therein.

In step 561, the UICC 560 transmits, to the NAS 540, the acknowledgement to USIM selection with authentication information used for access to an IOPS network, such as security information, identity of UE 500, etc.

In step 545, the UE performs an attachment process to the local EPC.

However, when the UE 500 has multiple UICCs configured like the UICCs 416 and 417, which include a USIM 403 for access to a macro network and a USIM 404 for access to an IOPS network, respectively, as illustrated in FIG. 4B, the NAS 540 selects the second UICC 417 storing the USIM 404 for access to an IOPS network in step 544.

In step 561, the UICC 417 selects and activates the USIM 404 for access to an IOPS network stored therein.

In step 562, the UICC 417 transmits, to the NAS 540, the acknowledgement to USIM selection along with authentication information used for access to an IOPS network, such as security information, identity of UE 500, etc.

In step 545, the UE performs an attachment process to the local EPC via the eNB 510.

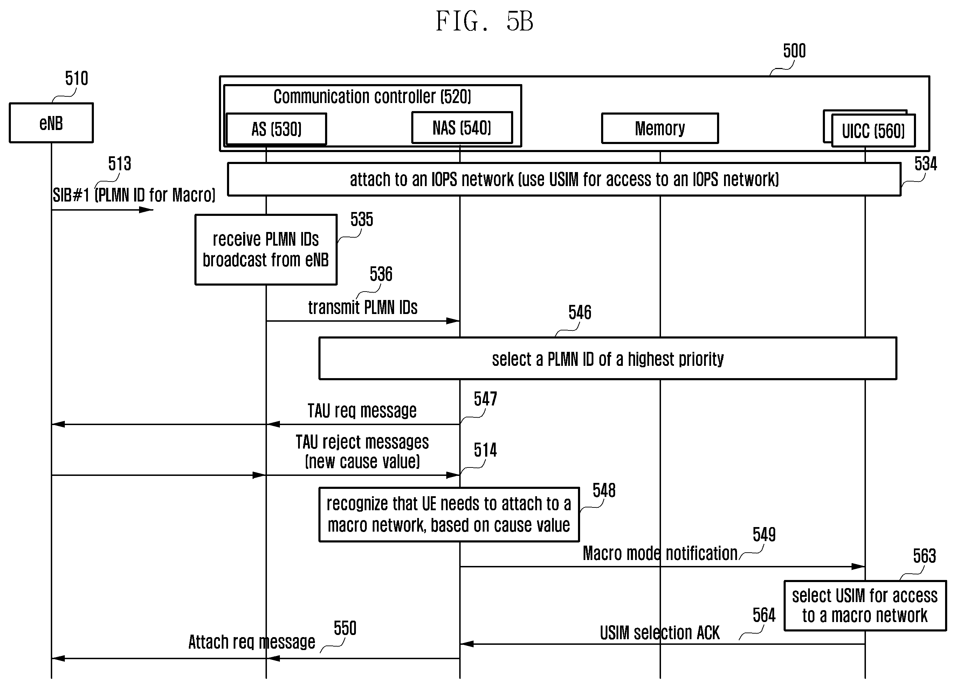

FIG. 5B is a flowchart illustrating a method for a UE attached to an IOPS network to re-select and access a macro network according to an embodiment of the present invention.

Referring to FIG. 5B, the UE 500 is attached to an IOPS network in step 534. The UE 500 is attached to an IOPS network using USIM 404 for access to an IOPS network.

In step 513, the eNB 510 ends an IOPS mode, starts to operate in a macro mode, and includes a PLMN ID for access to a macro network (Macro PLMN ID) in SIB#1, which is broadcast to indicate that the eNB is operating in a macro mode.

In step 535, the AS 530 receives PLMN IDs via the SIB#1 from the eNB 510, and in step 536, transfers the PLMN IDs to the NAS 540.

In step 546, the UE 500 selects a PLMN ID of a highest priority from among the received PLMN IDs in the PLMN selection list stored in the USIM.

In step 547, the NAS 540 ascertains that its TAI list does not contain a TAI of a corresponding cell, and performs a location registration process in a macro network, such as a TAU procedure, etc.

In step 514, the eNB 510 receives the TAU request, fails in authenticating the TAU request of the UE, and transmits a TAU reject message to the UE 500. The eNB 510 defines information contained in the TAU reject message, e.g., a cause value and a sub cause value, along with an existing value "Identity of UE cannot be recognized," and informs the UE 500 of "transmitted from macro EPC." Alternatively, the macro EPC 510 defines a separate cause value to be set as "Access to Macro EPC does not recognize identity of UE" and then transmits it to the UE 500.

In step 548, the UE 500 recognizes that it should attach to a macro network, based on the cause values.

In step 549, in order to obtain authentication information to attach to a macro network, the NAS 540 transmits a macro mode notification to the UICC 560.

For example, when the UICC 560 is configured the same as the UICC 406, including a USIM 403 for access to a macro network and a USIM 404 for access to an IOPS network, as illustrated in FIG. 4A, the NAS 540 notifies the UICC 560 that it is attached in a macro mode.

In step 563, the UICC 560 selects and activates the USIM 403 for access to a macro network from among the USIM information stored therein.

In step 564, the UICC 560 transmits, to the NAS 540, the acknowledgement to USIM selection with authentication information used for access to a macro network, such as security information, identity of UE, etc.

In step 550, the UE 500 performs an attachment process to the Macro EPC via the eNB 510.

However, when the UE 500 has multiple UICCs configured the same as UICCs 416 and 417, which include a USIM 403 for access to a macro network and a USIM 404 for access to an IOPS network, respectively, as illustrated in FIG. 4B, the NAS 540 selects the first UICC 416 storing the USIM 403 for access to a macro network in step 549.

In step 563, the UICC 416 selects and activates the USIM 403 for access to a macro network stored therein.

In step 564, the UICC 416 transmits, to the NAS 540, the acknowledgement to USIM selection along with authentication information used for access to a macro network, such as security information, identity of UE, etc.

In step 550, the UE 500 performs an attachment process to the Macro EPC via the eNB 510.

FIG. 6A is a flowchart illustrating a method for a UE to select and access an IOPS network according to an embodiment of the present disclosure.

Referring to FIG. 6A, the UE 600 is attached to a macro network in step 631, e.g., using USIM 403 for access to the macro network.

In FIG. 6A, similar to FIG. 5A, the UE 600 may be configured like the UE 400a in FIG. 4A or the UE 400b in FIG. 4B.

In step 641 a or 641 b, in the process of being attached to a macro network or when the UE 600 is already attached to a macro network, the NAS 640 receives the configuration information regarding PLMN IDs to operate an IOPS network from a subscriber identification storage unit (e.g., UICC 660 or memory 650).

In step 642, the NAS 640 obtains an IOPS PLMN ID from the received configuration information. The IOPS PLMN ID is used to determine whether a PLMN selected via the PLMN selection is a PLMN for IOPS.

For example, when the NAS 640 receives the configuration information regarding a PLMN ID to operate an IOPS network from a UICC 660 in step 641 a, it may obtain corresponding information, depending on the configuration of the UE 600.

When the UICC 660 is configured the same as the UICC 406 including a USIM 403 for access to a macro network and a USIM 404 for access to an IOPS network, as illustrated in FIG. 4A, the NAS 640 directly requests the configuration information regarding a PLMN ID to operate an IOPS network from the UICC 660. The UICC 660 requests the configuration information from the USIM 404 for access to an IOPS network and receives it therefrom. The UICC 660 transmits the received configuration information to the NAS 640.

Alternatively, the configuration information regarding a PLMN ID to operate an IOPS network may stored in the USIM 403 for access to a macro network. In this case, the NAS 640 receives the configuration information from the USIM 403.

However, when the UE 600 has multiple UICCs configured the same as UICCs 416 and 417, which include a USIM 403 for access to a macro network and a USIM 404 for access to an IOPS network, respectively, as illustrated in FIG. 4B, the NAS 640 directly requests the configuration information regarding a PLMN ID to operate an IOPS network from the USIM 404, and obtains it therefrom.

Alternatively, the configuration information regarding a PLMN ID to operate an IOPS network is stored in the USIM 403 for access to a macro network. In this case, the NAS 640 receives the configuration information from the USIM 403.

Alternatively, the NAS 640 may receive the configuration information regarding a PLMN ID to operate an IOPS network from a memory 650 in step 641 b. In this case, the configuration information may use a value which has been received from a network via OMA DM and stored in the memory 650.

In step 611. the eNB 610 starts to operate in an IOPS mode, and includes a PLMN ID for access to an IOPS network (IOPS PLMN ID) in SIB#1, which is broadcast to indicate that the eNB 610 is operating in IOPS mode.

In step 632, the AS 630 receives PLMN IDs via the SIB#1 from the eNB 610, and in step 633, transfers the PLMN IDs to the NAS 640.

In step 643, the UE 600 selects a PLMN ID of a highest priority from among the received PLMN IDs in the PLMN selection list stored in the USIM.

The NAS 640 compares the PLMN ID, selected via the PLMN selection, with the PLMN ID obtained in step 642, and determines whether the selected PLMN ID is a PLMN ID for access to an IOPS network in step 644.

In step 645, the NAS 640 ascertains that its TAI list does not contain a TAI of a corresponding cell, it performs a location registration process in a macro network, such as a TAU procedure, etc.

In step 612, the eNB 610 receives the TAU request, fails in authenticating the TAU request of the UE, and transmits a TAU reject message to the UE 600. In this case, a cause value to the TAU reject message is set to an existing value "Identity of UE cannot be recognized," and this may lead the UE 600 to attempt to perform a re-attachment process.

After receiving the TAU reject message, the UE 600 recognizes that it should attach to an IOPS network and allows the NAS 640 to transmit an IOPS mode notification to the UICC 660, in order to detect authentication information to attach to an IOPS network, in step 647.

For example, when the UICC 660 is configured like the UICC 406 illustrated in FIG. 4A, the NAS 640 notifies the UICC 660 that it is attached in IOPS mode.

In step 661, the UICC 660 selects and activates the USIM 404 for access to an IOPS network from among the USIM information stored therein.

In step 662, the UICC 660 transmits, to the NAS 640, the acknowledgement to USIM selection along with authentication information used for access to an IOPS network, such as security information, identity of UE 600, etc..

In step 648, the UE 600 performs an attachment process to the Local EPC via the eNB 610.

However, when the UE 600 is configured like the UE 400b illustrated in FIG. 4B, the NAS 640 selects the second UICC 417 storing the USIM 404 for access to an IOPS network in step 647.

In step 661, the UICC 417 selects and activates the USIM 404 for access to an IOPS network stored therein.

In step 662, the UICC 417 transmits, to the NAS 640, the acknowledgement to USIM selection along with authentication information used for access to an IOPS network, such as security information, identity of UE 600, etc.

In step 648, the UE 600 performs an attachment process to the local EPC via the eNB 610.

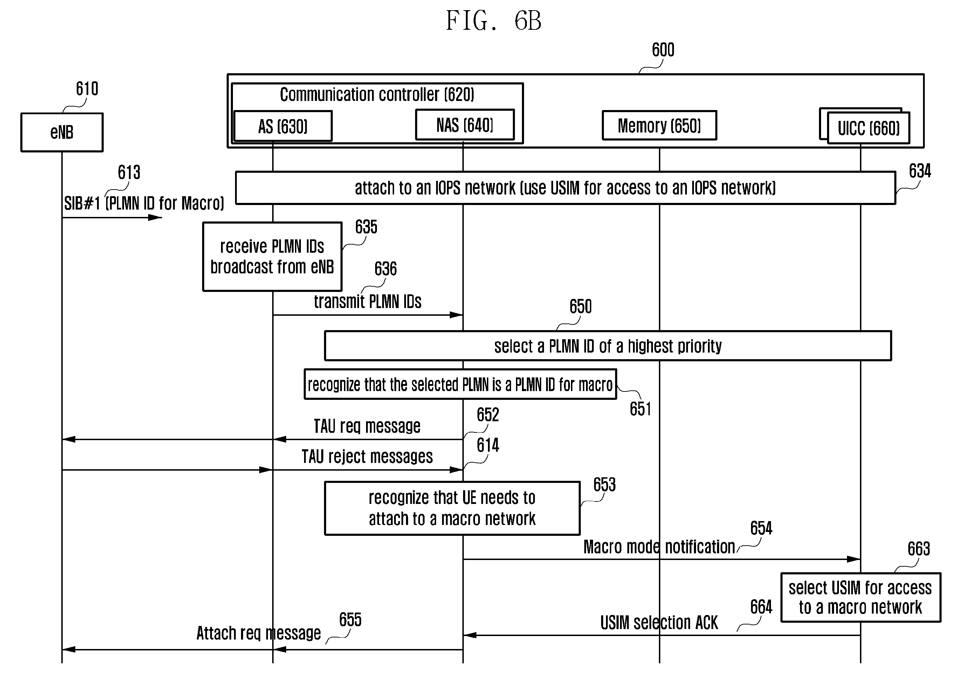

FIG. 6B is a flowchart illustrating a method for a UE attached to an IOPS network to re-select and access a macro network according to an embodiment of the present disclosure.

Referring to FIG. 6B, the UE 600 is attached to an IOPS network in step 634, e.g., using a USIM 404 for access to the IOPS network.

The NAS 640 has already recognized (secured) the information regarding a PLMN ID for access to an IOPS network and the information regarding a PLMN ID for access to a macro network.

In step 613, the eNB 610 ends an IOPS mode, starts to operate in a macro mode, and includes a PLMN ID for access to a macro network (Macro PLMN ID) in SIB#1, which is broadcast to indicate that the eNB 610 is operating in the macro mode.

In step 635, the AS 630 receives PLMN IDs via SIB#1 from the eNB 610, and in step 636, transfers the PLMN IDs to the NAS 640.

In step 650, the UE 600 selects a PLMN ID of a highest priority from among the received PLMN IDs in the PLMN selection list stored in the USIM.

In step 651, the NAS 640 determines whether the selected PLMN ID is a PLMN ID for access to a macro network.

In step 652, the NAS 640 ascertains that its TAI list does not contain a TAI of a corresponding cell, and performs a location registration process in a macro network, such as a TAU procedure, etc.

In step 614, the eNB 610 receives the TAU request, fails in authenticating the TAU request of the UE 600, and transmits a TAU reject message to the UE 600. In this case, a cause value to the TAU reject message is set to an existing value "Identity of UE cannot be recognized," and this may lead the UE 600 to attempt to perform a re-attachment process.

After receiving the TAU reject message, in step 6532, the UE 600 recognizes that it should attach to a macro network, and in step 654, the NAS 640 transmits a macro mode notification to the UICC 660, in order to detect authentication information to attach to a macro network.

For example, when the UICC 660 configured like the UICC 406 illustrated in FIG. 4A, the NAS 640 notifies the UICC 660 that it is attached in macro mode.

In step 663, the UICC 660 selects and activates the USIM 403 for access to a macro network from among the USIM information stored therein.

In step 664, the UICC 660 transmits, to the NAS 640, the acknowledgement to USIM selection with authentication information used for access to a macro network, such as security information, identity of UE 600, etc.

In step 655, the UE 600 performs an attachment process to the Macro EPC via the eNB 610.

However, when the UE 600 has multiple UICCs configured like the UICCs 416 and 417 illustrated in FIG. 4B, the NAS 640 selects the first UICC 416 storing the USIM 403 for access to a macro network in step 654.

In step 663, the UICC 416 selects and activates the USIM 403 for access to a macro network stored therein.

In step 664, the UICC 416 transmits, to the NAS 640, the acknowledgement to USIM selection with authentication information used for access to a macro network, such as security information, identity of UE 600, etc.

In step 655, the UE 600 performs an attachment process to the Macro EPC via the eNB 610.

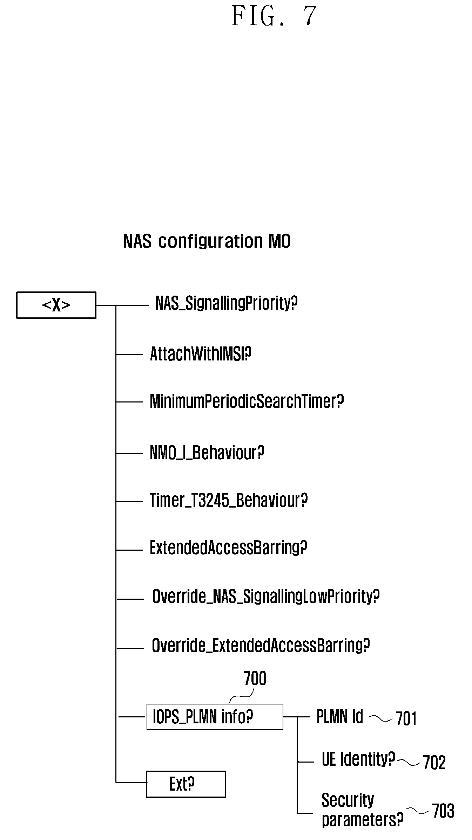

FIG. 7 illustrates a structure of an MO for provisioning via OMA-DA, which allows a UE to receive configuration information used in an IOPS from a network, according to an embodiment of the present disclosure.

Referring to FIG. 7, a UE may read configuration information regarding a PLMN ID for managing an IOPS network (IOPS PLMN ID) from a memory. When the UE previously receives configuration information from a network via OMA DM, it may receive the information according to the architecture of an MO. The configuration information regarding an IOPS PLMN ID may be transmitted using a NAS configuration MO, but is not limited thereto. For example, the configuration information may also be transmitted by other types of MOs.

In order to receive the configuration information regarding an IOPS PLMN ID, the UE transmits a Generic Alert message to an OMA DM server in a network and receives a provisioning according to a preset MO. Alternatively, the OMA DM server transmits a push message or a short message service (SMS) message to the UE, informing the UE of available links to attach thereto. Thereafter, the UE attaches to the OMA DM server via the links and receives a provisioning according to a preset MO from the server.

The configuration information regarding an IOPS PLMN ID may be included in an IOPS PLMN Info node 700. When the UE is not a type of UE for public safety, it does not need to include the IOPS PLMN Info node 700.

The IOPS PLMN Info node 700 includes a PLMN ID 701, a UE identity 702, and a security parameters 703.

When the IOPS PLMN Info node 700 informs only IOPS PLMN info, it may include only PLMN ID. However, when the MO is configured such that authentication information for access to an IOPS network is stored in a memory, instead of a separate USIM for access to an IOPS network, the IOPS PLMN Info node 700 may include UE identity 702 and security parameters 703, which will be used for access to an IOPS network.

FIG. 8A is a flowchart illustrating a method for a UE to select an IOPS mode and access an IOPS network according to an embodiment of the present disclosure.

Referring to FIG. 8A, a UE 800 is attached to a macro network in step 831, e.g., using USIM 403 for access to the macro network. In FIG. 8A, similar to FIGs. 5A and 6A, the UE 800 may configured like the UE 400a illustrated in FIG. 4A or the UE 400b illustrated in FIG. 4B.

In step 841 a or 841 b, in the process of being attached to a macro network or when the UE 800 is already attached to the macro network, the NAS 840 may receive the configuration information regarding PLMN IDs to operate an IOPS network from a subscriber identification storage unit (e.g., UICC 860 or memory 850).

In step 842, the NAS 840 obtains an IOPS PLMN ID from the received configuration information. The IOPS PLMN ID is used to determine whether a PLMN selected via the PLMN selection is a PLMN for IOPS.

For example, when the NAS 840 receives the configuration information regarding a PLMN ID to operate an IOPS network from a UICC 860 in step 841a, it may obtain corresponding information, depending on the configuration of the UE.

When the UICC 860 is configured like the UICC 406 illustrated in FIG. 4A, the NAS 840 directly requests the configuration information regarding a PLMN ID to operate an IOPS network from the UICC 860. The UICC 860 requests the configuration information from the USIM 404 for access to an IOPS network and receives it therefrom. The UICC 860 transmits the received configuration information to the NAS 840.

Alternatively, the configuration information regarding a PLMN ID to operate an IOPS network may be stored in the USIM 403 for access to a macro network. In this case, the NAS 840 receives the configuration information from the USIM 403.

However, when the UE 800 includes multiple UICCs configured like the UICCs 416 and 417 illustrated in FIG. 4B, the NAS 840 directly requests the configuration information regarding a PLMN ID to operate an IOPS network from the USIM 404, and obtains it therefrom.

Alternatively, the configuration information regarding a PLMN ID to operate an IOPS network may be stored in the USIM 403 for access to a macro network. In this case, the NAS 840 receives the configuration information from the USIM 403.

Alternatively, the NAS 840 may receive the configuration information regarding a PLMN ID to operate an IOPS network from a memory 850 in step 841b. In this case, the configuration information may use a value which has been received from a network via OMA DM and stored in the memory 650.

In step 811, the eNB 810 starts to operate in an IOPS mode, and includes a PLMN ID for access to an IOPS network (IOPS PLMN ID) in SIB#1, which is broadcast to indicate that the eNB 810 is operating in an IOPS mode.

In step 832, the AS 830 receives PLMN IDs via the SIB#1 from the eNB 610, and in step 833, transfers the PLMN IDs to the NAS 840.

In step 843, the UE 800 selects a PLMN ID of a highest priority from among the received PLMN IDs in the PLMN selection list stored in the USIM.

In step 844, the NAS 840 compares the PLMN ID, selected via the PLMN selection, with the PLMN ID obtained in step 842, and determines whether the selected PLMN ID is a PLMN ID for access to an IOPS network.

In step 845, the UE 800 recognizes that it should attach to an IOPS network (in this case, the TAU procedure may be omitted).

In step 846, the NAS 840 transmits an IOPS mode notification to the UICC 860, in order to detect authentication information to attach to an IOPS network.

For example, when the UICC 860 is configured like the UICC 406 illustrated in FIG. 4A, the NAS 840 notifies the UICC 860 that it is attached in IOPS mode.

In step 861, the UICC 860 selects and activates the USIM 404 for access to an IOPS network from among the USIM information stored therein.

In step 862, the UICC 860 transmits, to the NAS 840, the acknowledgement to USIM selection along with authentication information used for access to an IOPS network, such as security information, identity of UE, etc.

In step 848, the UE 800 performs an attachment process to the Local EPC via the eNB 810.

However, when the UE 800 has multiple UICCs configured like the UICCs 416 and 417 illustrated in FIG. 4B, the NAS 840 selects the second UICC 417 storing the USIM 404 for access to an IOPS network in step 846.

In step 861, the UICC 417 selects and activates the USIM 404 for access to an IOPS network stored therein.

In step 862, the UICC 417 transmits, to the NAS 840, the acknowledgement to USIM selection with authentication information used for access to an IOPS network, such as security information, identity of UE 800, etc.

In step 847, the UE 800 performs an attachment process to the Local EPC via the eNB 810.

Like the NAS 640 in FIG. 6A, the NAS 840 may receive the configuration information regarding an IOPS PLMN ID from the memory 850 in step 841b. In this case, the configuration information may be previously received from a network via OMA DM, e.g., using the method illustrated in FIG. 7.

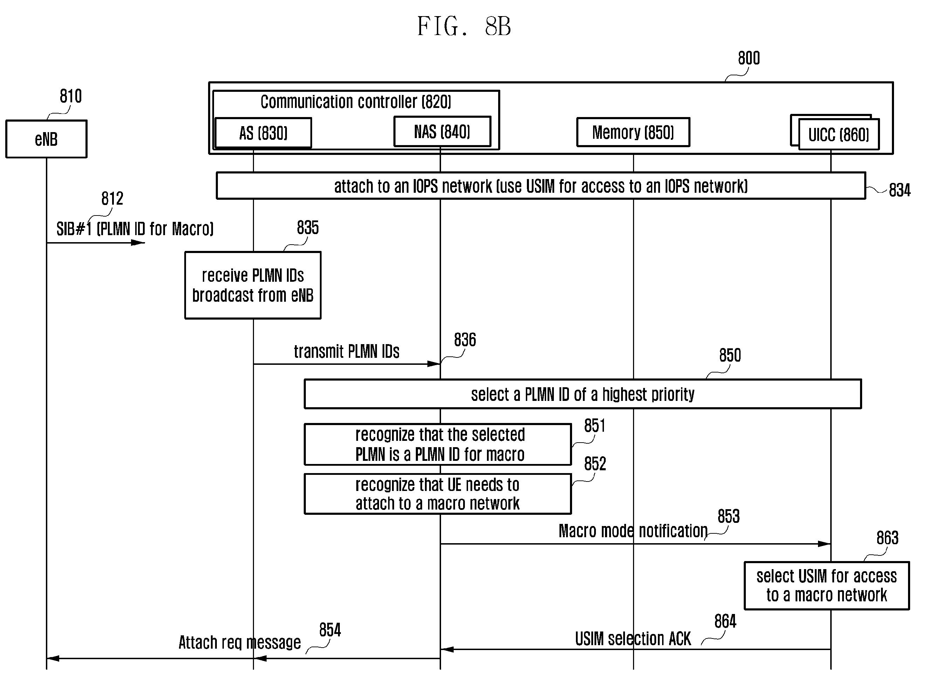

FIG. 8B is a flowchart illustrating a method for a UE attached to an IOPS network to re-select and access a macro network according to an embodiment of the present invention.

Referring to FIG. 8B, the UE 800 is attached to an IOPS network in step 834, e.g., using a USIM 404 for access to an IOPS network.

The NAS 840 has already recognized (secured) the information regarding a PLMN ID for access to an IOPS network and the information regarding a PLMN ID for access to a macro network.

In step 812, the eNB 810 ends an IOPS mode, starts to operate in a macro mode, and includes a PLMN ID for access to a macro network (Macro PLMN ID) in SIB#1, which is broadcast to indicate that the eNB 810 is operating in a macro mode.

In step 835, the AS 830 receives PLMN IDs via the SIB#1 from the eNB 810, and in step 836, transfers the PLMN IDs to the NAS 840.

In step 850, the UE 800 selects a PLMN ID of a highest priority from among the received PLMN IDs in the PLMN selection list stored in the USIM.

In step 851, the NAS 840 determines whether the selected PLMN ID is a PLMN ID for access to an IOPS network.

In step 852, the UE recognizes that it should attach to a macro network (in this case, the TAU procedure may be omitted).

In step 853, the NAS 840 transmits a macro mode notification to the UICC 860, in order to detect authentication information to attach to a macro network.

For example, when the UICC 860 is configured like the UICC 406 illustrated in FIG. 4A, the NAS 840 notifies the UICC 860 that it is attached in the macro mode.

In step 863, the UICC 860 selects and activates the USIM 403 for access to a macro network from among the USIM information stored therein.

In step 864, the UICC 860 transmits, to the NAS 840, the acknowledgement to USIM selection along with authentication information used for access to a macro network, such as security information, identity of UE 800, etc.

In step 854, the UE 800 performs an attachment process to the Macro EPC via the eNB 810.

However, when the UE 800 includes multiple UICCs configured like the UICCs 416 and 417 illustrated in FIG. 4B, the NAS 840 selects the first UICC 416 storing the USIM 403 for access to a macro network in step 853.

In step 863, the UICC 416 selects and activates the USIM 403 for access to a macro network stored therein.

In step 864, the UICC 416 transmits, to the NAS 840, the acknowledgement to USIM selection with authentication information used for access to a macro network, such as security information, identity of UE 800, etc.

In step 854, the UE 800 performs an attachment process to the Macro EPC via the eNB 810.

According to various embodiments of the present disclosure, a service provider includes PLMN (Public Land Mobile Network), etc, and service provider information includes PLMN ID.

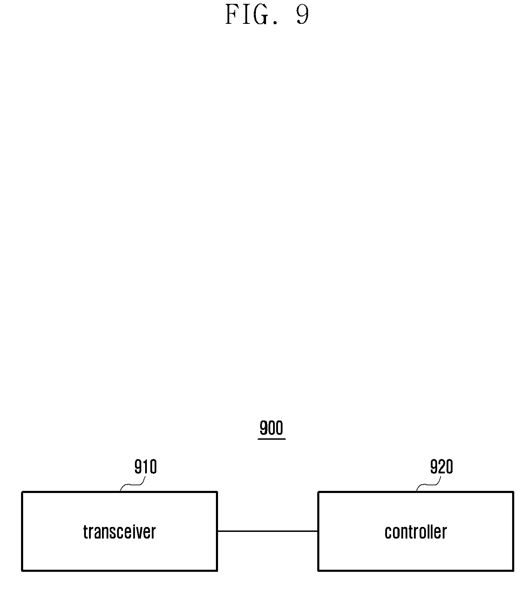

FIG. 9 illustrates an eNB 900 (ex. 510, 61, 810) according to various embodiments of the present invention.

Referring to FIG. 9, the eNB 900 includes a transceiver 910 and a controller 920. The transceiver 910 is capable of transmission/reception of signals to/from at least one network node (e.g., UE, Local EPC, and Macro EPC). The controller 920 determines whether the eNB 900 operates in macro mode or IOPS mode. The controller 920 includes a PLMN ID in SIB#1 based on the determination and transmits it to the transceiver 910. The PLMN ID may be a PLMN ID used for operating a macro network or an IOPS network.

As described above, when a terminal transitions the communication access to from a macro network to an IOPS network, a terminal according to an embodiment of the present disclosure performs efficient replacement of its security information, i.e., credential information or encrypted privacy information.

In addition, various embodiments of the present disclosure simplify an access procedure to an IOPS network by a terminal, which expedites a start to providing services via the IOPS network.

Each of the above described elements of the electronic device (or UE) according to various embodiments of the present disclosure may be formed by one or more components, and the names of the corresponding elements may vary according to the type of the electronic device. The electronic device according to various embodiments of the present disclosure may include at least one of the above described elements, and may exclude some of the elements or further include other additional elements. In addition, some of the elements of the electronic device according to various embodiments of the present disclosure may be coupled into a single entity while performing the same functions as those of the corresponding elements before the coupling.

In the present disclosure, the term for a component or block, '-er,' '∼ unit,' '∼ part,' '∼ module,' '∼ device,' '∼ device,' etc., refers to a unit including one of hardware, software, and firmware or any combination of two or more of them. The term, '-er,' '∼ unit,' '∼ part,' '∼ module,' '~ device,' '∼ device,' etc., may be interchangeable with the term "unit", "logic", "logical block", "component", or "circuit". The term, '-er,' '∼ unit,' '∼ part,' '∼ module,' '∼ device,' '∼ device,' etc., may be the smallest unit of an integrated component or a part thereof. The term, '-er,' '∼ unit,' '∼ part,' '~ module,' '∼ device,' '∼ device,' etc., may be the smallest unit that performs one or more functions or a part thereof. The term, '-er,' '∼ unit,' '∼ part,' '∼ module,' '∼ device,' '∼ device,' etc., be mechanically or electronically implemented. For example, the term, '-er,' '∼ unit,' '∼ part,' '∼ module,' '∼ device,' '∼ device,' etc., may include at least one of an application-specific integrated circuit (ASIC) chip, a field-programmable gate arrays (FPGA), and a programmable-logic device for performing certain operations, which are now known or will be developed in the future.

While the present disclosure has been particularly shown and described with reference to certain embodiments thereof, it will be understood by those of ordinary skill in the art that various changes in form and details may be made therein without departing from the spirit and scope of the present disclosure as defined by the following claims and their equivalents.

## Claims

1. A method for a terminal to attach to a network in a wireless communication system, the method comprising:
selecting a service provider based on service provider information received from a base station;
identifying if the selected service provider operates an isolated evolved universal mobile telecommunications system (UMTS) terrestrial radio access network (E-UTRAN) operation for public safety (IOPS) network;
if the selected service provider operates the IOPS network, selecting authentication information to attach to the IOPS network from a subscriber identification storage unit; and
accessing the IOPS network using the selected authentication information.

2. The method of claim 1, wherein the subscriber identification storage unit comprises at least one of a memory and a universal integrated circuit card (UICC).

3. The method of claim 2, wherein the UICC comprises:
a first UICC including the authentication information for access to the IOPS network; and
a second UICC including authentication information for access to a macro evolved packet core (EPC) network, and
wherein selecting the authentication information comprises requesting the authentication information for access to the IOPS network from the first UICC.

4. The method of claim 2, wherein the UICC stores the authentication information for access to the IOPS network and authentication information for access to a macro evolved packet core (EPC) network, and
wherein selecting the authentication information comprises requesting the authentication information for access to the IOPS network from the UICC.

5. The method of claim 2, wherein the authentication information is received from a network via open mobile alliance device management (OMA DM) and is stored in the memory.

6. The method of claim 1, wherein identifying if the selected service provider operates the IOPS network comprises receiving a tracking area update reject message including predetermined information.

7. The method of claim 1, wherein identifying if the selected service provider operates the IOPS network comprises:
identifying the service provider operating the IOPS network from the subscriber identification storage unit; and
comparing the selected service provider with the identified service provider, and
the method of claim 7, further comprises:
receiving a tracking area update reject message; and
determining to attach to the IOPS network, in response to the tracking area update reject message.

8. A terminal comprising:
a transceiver;
a subscriber identification storage unit configured to store authentication information corresponding to service provider information; and
a controller configured to:
select a service provider, based on service provider information received from a base station;
identify if the selected service provider operates an Isolated evolved universal mobile telecommunications system (UMTS) terrestrial radio access network (E-UTRAN) operation for public safety (IOPS) network;
if the selected service provider operates the IOPS network, select, from the subscriber identification storage unit, authentication information to attach to the IOPS network; and
access the IOPS network using the selected authentication information.

9. The terminal of claim 8, wherein the subscriber identification storage unit comprises at least one of a memory and a universal integrated circuit card (UICC).

10. The terminal of claim 9, wherein the UICC comprises:
a first UICC including the authentication information for access to the IOPS network; and
a second UICC including authentication information for access to a macro evolved packet core (EPC) network, and
wherein the controller is further configured to request the authentication information for access to the IOPS network from the first UICC.

11. The terminal of claim 9, wherein the UICC stores the authentication information for access to the IOPS network and authentication information for access to a macro evolved packet core (EPC) network, and
wherein the controller is further configured to request the authentication information for access to the IOPS network from the UICC.

12. The terminal of claim 9, wherein the authentication information is received from a network via open mobile alliance device management (OMA DM) and is stored in the memory.

13. The terminal of claim 8, wherein the controller is further configured to:
receives a tracking area update reject message including predetermined information, and
recognize that the selected service provider operates the IOPS network, in response to the tracking area update reject message.

14. The terminal of claim 8, wherein the controller is further configured to:
identify the service provider operating the IOPS network from the subscriber identification storage unit;
compare the selected service provider with the identified service provider; and
recognize that the selected service provider operates the IOPS network.

15. The terminal of claim 14, wherein the controller is further configured to:
receive a tracking area update reject message; and
determine to attach to the IOPS network, in response to the tracking area update reject message.
